# EUROPEAN PATENT SPECIFICATION

(11) **EP 1 135 864 B1**
(45) Date of publication and mention of the grant of the patent: **31.12.2008**
(21) Application number: 00966558.9
(22) Date of filing: 29.09.2000
(51) Int. Cl.: H04B 1/69, H04J 11/00

(54) **APPARATUS AND METHOD FOR EXPANDING CHANNELS IN CDMA SYSTEM**
GERÄT UND VERFAHREN ZUR ERHÖHUNG DER KANALANZAHL IN EINEM CDMA SYSTEM
APPAREIL ET PROCEDE PERMETTANT D'AUGMENTER LE NOMBRE DE VOIES DANS UN SYSTEME AMCR

(30) Priority: 30.09.1999 KR 9941943
(43) Date of publication of application: 26.09.2001
(73) Proprietor: SK Telecom Co., Ltd., Jongro-ku, Seoul 110-110 (KR)
(72) Inventor: YANG, Sung Tae, 1588-13, Gwanyang-dong-do, 431-060 (KR); JEUNG, Ha Jae, Jingeon-myun Namyangju Kyunggi-do472-830 (KR); CHOI, Chang Ho, Ilsan-gu, Goyang Kyunggi-do, 411-351 (KR); HONG, Sung Cheol, Dongan-gu Anyang Kyunggi-do, 431-080 (KR)
(74) Representative: Reinhard - Skuhra - Weise & Partner GbR
(86) International application number: PCT/KR2000/001088
(87) International publication number: WO 2001/024392

(56) References cited:
- EP-A- 0 828 361
- EP-A- 0 910 181
- US-A- 5 442 625
- US-A- 5 586 113
- US-A- 5 859 840
- US-A- 5 914 950
- K. OKAWA AND F. ADACHI: 'Orthogonal multi-spreading factor forward link for coherent DS-CDMA mobile radio' IEEE 6TH INTERNATIONAL CONFERENCE ON UNIVERSAL PERSONAL COMMUNICATIONS RECORD vol. 2, October 1997, pages 618 - 622

## Description

### 1. Technical Field

The present invention relates to channels of code division multiple access systems and, more particularly, to an apparatus and method for increasing availabe channels in a code division multiple access (CDMA) transmit modulator.

### 2. Background Art

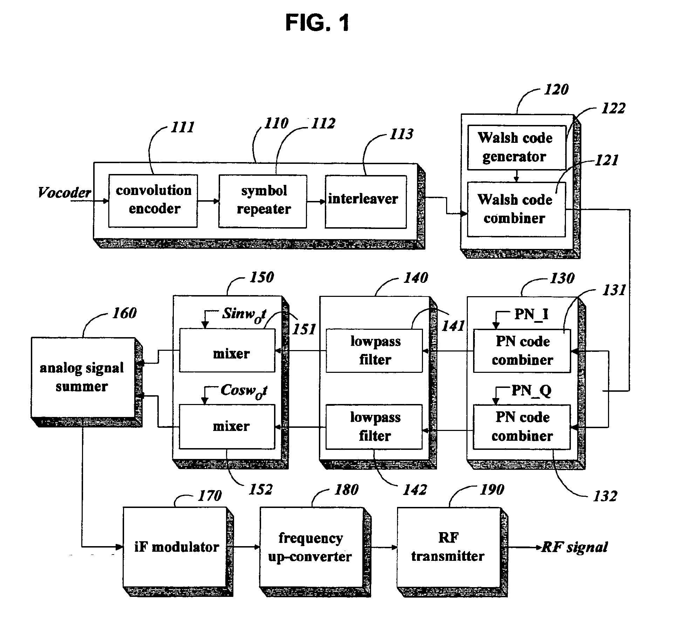

Fig. 1 shows a block diagram of a code division multiple access (CDMA) transmit modulator of the conventional art. The transmit modulator comprises a channel encoder 110, which includs a convolution encoder 111, a symbol repeater 112 and an interleaver 113, for convolutionally encoding with repetition and interleaving the input data from a mobile station; a channel modulator 120, which includs a Walsh code combiner 121 and a Walsh code generator 122, for combining the output of channel encoder 100 with a Walsh code such that this channel is distinguishable from the other traffic channels in the allocated frequency assignment; a pseudo noise (PN) code combining unit 130, including first and second PN code combiners 131 and 132, for combining the output of Walsh code combiner 121 and both of in-phase (I) and quadrature (Q) channel PN sequences, PN_I and PN_Q, which are generated and determined by a predetermined PN offset value such that multiple cell-sites or sectors using the same frequency assignment are distinguished from one another; a lowpass filter 140, including first and second digital finite impulse response (FIR) filters 141 and 142, for filtering out high frequency components of the outputs of the first and second PN code combiners 131 and 132 and flattens them in the frequency assignment; an analog signal modulator 150, including first and second mixers 151 and 152, for multiplying the D/A-converted signals of the first and second FIR filters 141 and 142 with sine and cosine functions and producing the modulated analog signals; an analog signal summer 160 for summing the outputs of analog signal modulator 150; an intermediate frequency (IF) modulator 170 for modulating the signal of analog signal summer 160 by using the quadrature phase shift key (QPSK) modulation; a frequency up-converter 180 for up-converting the IF signal into a radio frequency (RF) signal; and an RF transmitter 190 for amplifying and radiating the RF signal through an antenna system.

The operation of the transmit modulator of the conventional art, shown in FIG. 1, is described below in detail.

The channel input data from a vocoder is convolutionally encoded for error correction by convolutional encoder 111. The encoding rate of convolutional encoder 111 is twice the input data rate. For example, for the input data symbols whose rate is 9,600 bits per seoncd (bps), convolutional encoder 111 outputs data symbols whose rate is 19,200 bps. The encoded data is then provided as input to symbol repeater 112. Depending on the input data rate, the symbols are repeated by symbol repeater 112 in order that the rate of the resulting output of symbol repeater 112 becomes 19,200 bps. That is, symbols are repeated for the input data of low rates. For example, if the input data rate is 9,600 bps, the symbols are repeated twice, if the input data rate is 4, 800 bps, they are repeated four times, and so on. The repeated symbols are inputted to interleaver 113. Interleaving is done by interleaver 113 with reference to a predetermined sequence to spread possible burst errors into random errors.

Walsh code generator 122 generates a Walsh code that is used to have this channel to be distinguished from other traffic channels. It should be noted that the transmit modulator with capacity of M channels has M channel modulators, each with its own Walsh code. The Walsh codes used in the channel modulators are orthogonal to each other. For simplicity, only one traffic channel is depicted in the transmit modulator of FIG. 1.

The interleaved symbol output and the Walsh sequence are exclusive-OR' ed by Walsh code combiner 121. The chip rate of Walsh code becomes the CDMA spreading speed. The spread data stream is provided as input to a QPSK modulater comprising PN code combining unit 130, lowpass filter 140, analog signal modulator 150, and analog signal summer 160. The data stream from channel modulator 120 is inputted to each of PN code combiners 131 and 132 that multiply the data stream by in-phase and quadrature channel PN sequences, respectively. The two resulting data stream are provided as input to lowpass filter 140 for bandwidth reduction and are then modulated to analog signals through two mixers 151 and 152. The outputs of the mixers 151 and 152 are added into an analog signal by analog signal summer 160.

The output signal of analog signal summer 160 is modulated into an IF signal by IF signal modulator 170. Frequency up-converter 180 converts the IF signal to an RF signal and then the RF signal is amplified, bandpass filter, and radiated through an antenna system by RF transmitter 190.

When 64 Walsh codes are used for channelization, 64 channels are totally available in the transmit modulator of FIG. 1, because only one traffic channel is available for each channel modulator. Except the pilot, the sync, and the paging channels, 61 channels can be used for traffic channels. Therefore, about 30 channels can be at most be maintained in the transmit modulator to support the good-quality communication service (It is known in the art that the number of channels of good-quality service is about 30 even though there are 61 available traffic channels). Hence, as the number of users increases, the channel resource that should be allocated to each user decreases. As a result, if the existing voice channels are used for data communication service, it is impossible to obtain more data channels, so that the data communication cost increases because users pay the same cost as that of the existing voice channels. It is reason why it is difficult to provide data communication service at a lower cost.

From US-A-5 442 625, a multi-code code division multiple access system is known which allows a user at a radio transmitter unit to dynamically change its source data bit rate. In response to a user input selecting one of the plurality of source bit rates, an adjustable coding circuit in the transmitter spreads and transmits the user's digital bit stream received at the selected bit rate to a channel bit rate which at least equals the highest bit rate of the plurality of source bit rates. The plurality of source bit rates includes a basic bit rate R and at least one bit rate which is a multiple M of the basic bit rate R, where M is an integer of at least 1. The user's input selects a particular user source bit rate by identifying a basic bit rate multiple M to a base station that is to receive the transmission.

EP 0 828 361 A2 discloses a method and apparatus for varying the data transmission rate of a code division multiple access (CDMA) telecommunications system. The method and apparatus may be implemented into an existing system operating according to a standard designed for a base data transmission while utilizing the Walsh modulator length, the data transmission frame structure, the channel encoding scheme, or the I/O modulation level of the existing system. Serial data is input to a transmitter/modulator at a data rate which is higher than the base data transmission rate. The serial data is received over a time period having a duration equal to the duration of the transmission frame and demultiplexed into a plurality of sets of input data. Each of the plurality of sets of input data is then processed in one of a plurality of subchannels using the system channel encoding and interleaving scheme to generate a plurality of sets of processed data. A output serial data stream is then generated by multiplexing the plurality of sets of processed data from the subchannels together. The serial output stream is generated so that the originally received serial data included in the serial output data stream, is generated at the first data rate. The serial output data stream is spread to generate at least one spread data stream and is then transmitted on the channel during a second time period having a duration equal to the duration of the transmission frame, so that the serial data included in the at least one spread data stream is transmitted at the first data rate.

### 3. Disclosure of Invention

It is a primary object of the present invention to provide a method and apparatus for increasing the number of channels in a code division multiple access (CDMA) system by dividing a traffic channel into a plurality of subchannels of low data rate.

It is another object of the present invention to provide a method and apparatus for enabling reliable and long- distance communication with low power in a CDMA system by obtaining processing gain on the subchannels of low data rate in the demodulation process.

In a code division multiple access (CDMA) transmit modulator comprising a channel encoder for convolutionally encoding input signal from a vocoder with symbol repetition and interleaving the encoded signal; a channel modulator for combining the output signal from the channel encoder and an orthogonal code corresponding to a traffic channel; a pair of pseudo noise (PN) combiners, each for combining the modulated signal and a respective one of a pair of predetermined-offset PN signals; a pair of lowpass filters, each for filtering a respective output signal of the pair of PN combiners and flattening the power level of the resulting signal; a pair of digital-to-analog converters, each for converting a respective output signal of the pair of lowpass filters to analog signal; and an analog signal summer for summing the analog signals of the pair of digital-to-analog converters, an channel increasing apparatus according to the present invention comprises a plurality of subchannel encoders substituted for said channel encoder, each for convolutionally encoding with symbol repetition and interleaving input data from a respective one of a plurality of subchannels, the data rate of each of sthe plurality of subchannels being lower than the encodable date rate of the traffic channel by said channel encoder; a plurality of subchannel modulators, each for combining an output signal from a respective one of said plurality of subchannel encoders and a respective orthogonal code signal distinguishing one from another subchannel, all subchannels being accommodated in a single traffic channel; and a subchannel summer for summing output signals of said plurality of the subchannel modulators and providing the summed signal to said channel modulator..

The apparatus according to the present invention provides the following advantages.

First, because each of traffic channels can be divided into a plurality of subchannels of low data rate utilizing multiple modulation, the apparatus makes it possible to efficiently use the channel resource. Therefore, the apparatus enables to provide more data channels of low data rate and to reserve more voice channels for cellular phones as well.

Second, the increase of processing gain in the correlation detection by using multiple modulation of subchannels of low data rate enables data of low rate to be transmitted farther and more reliably with less power than in the transmit modulator of the conventional art.

Third, in environments where data transmission using CDMA voice channels is nearly impossible, the apparatus enables data transmission of low rate and thus be utilized in very long distance communication and/or sea rescue communication systems.

### 4. Brief Description of Drawings

The accompanying drawings, which are included to provide a further understanding of the invention, illustrate the preferred embodiment of this invention, and together with the description, serve to explain the principles of the present invention.

In the drawings:
FIG. 1 is a block diagram of a CDMA transmit modulator;
FIG. 2 is a block diagram of a CDMA transmit modulator equipped with the apparatus according to an embodiment of the present invention; and
FIG. 3 is a block diagram of a subchannel summer shown in FIG. 2.

### 5. Modes for Carrying out the Invention

Hereinafter, a preferred embodiment of the present invention will be described in detail referring to the accompanying drawings.

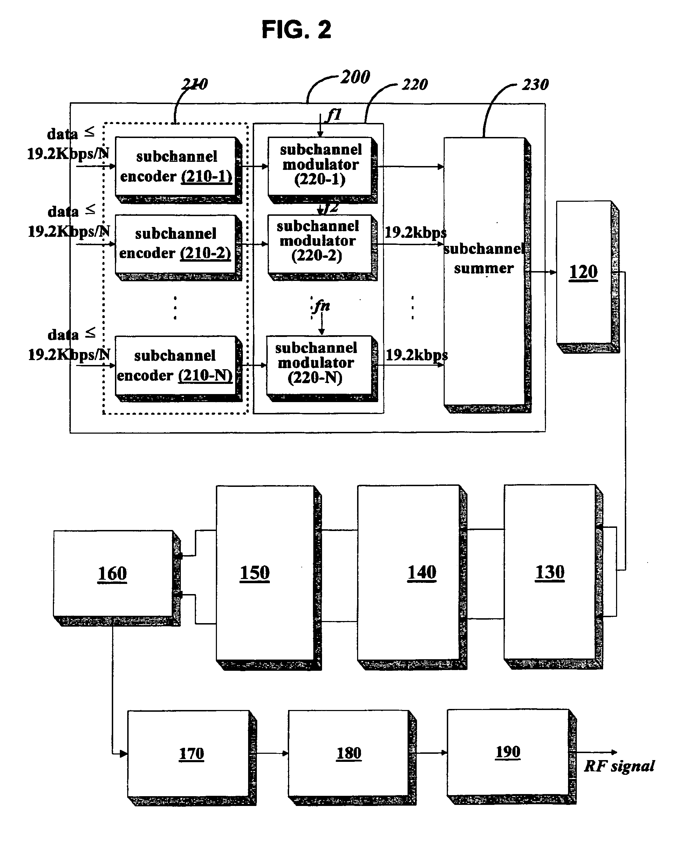

FIG. 2 shows a block diagram of a transmit modulator including the apparatus according to an embodiment of the present invention. In the transmit modulator, the following constituting components: channel modulator 120, PN code combining unit 130, lowpass filter 140, analog signal modulator 150, analog signal summer 160, IF signal modulator 170, frequency up-converter 180, and RF transmitter 190 are all the same as those of the transmit modulator of FIG. 1. Hence, their numbers on FIG. 2 is the same as those of FIG. 1 and thus the description of their operations is omitted here.

As shown in FIG. 2, the apparatus 200 according to an embodiment of the present invention comprises a plurality of subchannel encoders 210 (210-1, 210-2, ..., 210-N, where N is the number of subchannels), the function of each subchannel encoder being the same as that of channel encoder 110 of FIG. 1, a plurality of subchannel modulators 220 (220-1, 220-2, ..., 220-N), and a subchannel summer 230.

The input data on each subchannel is convolutionally encoded with repetition and then interleaved by a respective one of the plurality of subchannel encoders. It should be noted that each input data rate is lower than the encodable input data rate by channel encoder 110 of FIG. 1 (hereinafter, 19.2 kbps) divided by the number of subchannels. That is, the input data rate on each subchannel is lower than 19.2/N kbps. Each subchannel modulator combines data that is provided at a rate lower than 19.2/N kbps on the corresponding subchannel encoder and a respective orthogonal code of 19.2 kbps rate that is selected from an orthogonal code set, f1 through fn (code f1 and code fm are orthogonal each other if 1 is not equal to m) . Hereinafter, such orthogonal codes are referred to as subchannel orthogonal seuquences. Subchannel summer 230 sums the outputs of the plurality of subchannel modulators 220, each inputted at 19.2 kbps rate, and provides the summed output data to channel modulator 120.

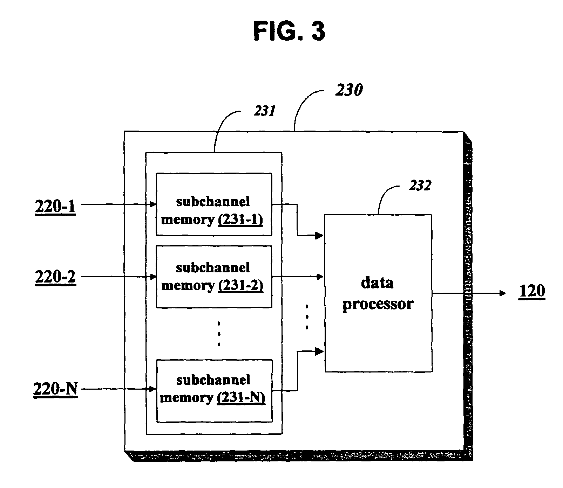

Subchannel summer 230, as shown in FIG. 3, comprises a plurality of subchannel memories 231 (231-1, 231-2, ..., 231-N), each for storing the subchannel data from the corresponding subchannel modulator, and a data processor 232 for processing the data stored in the plurality of subchannel memories 231. It should be noted that subchannel summer 230 is capable of reducing the energy of the output of subchannel summer 230. To be specific, At a rate of 19.2 kbps, the output of each subchannel modulator is inputted to subchannel summer 230. Summing each input data of 19.2 kbps increases the energy of the output of subchannel summer 230, which causes noise or cross-talk over other traffic channels. Therefore, it is required to reduce the energy of each of the subchannel data.

Hereinafter, the operations of multiple modulation in the apparatus according to an embodiment of the present invention will be described in detail.

Input data on each subchannel is convolutionally encoded, with symbol repetition, and interleaved by a respective one of the plurality of subchannel encoders and is then provided as input to a respective one of the plurality of subchannel modulators. It should be understood that it is required that the data rate of each subchannel is lower than 19.2/N kbps, where N is the number of subchannels. For example, if subchannel orthogonal sequence used for each subchannel modulator is 64-bit long and is generated at a rate of 19.2 kbps, the data rate of each subchannel should be lower than 300 bps in order that data chip of 1 bit is multiplied by 64 bit-long subchannel orthogonal sequence of 19.2 kbps (64/19.2 kbps = 1/300). This requirement of the data rate of each subchannel is satisfied when the number of subchannels is smaller than 64.

Each subchannel modulator multiplies the subchannel encoded data by a respective one of subchannel orthogonal sequences, f1, f2, ..., fn, and provides the modulated subchannel data to subchannel summer 230. It should be noted that the bit rate of each subchannel orthogonal sequence is lower than the bit rate of Walsh codes, each being used in channel modulator for distinguishing traffic channels in the frequency assignment (FA). For example, each subchannel orthogonal sequence of 19.2 kbps is multiplied with respective low speed input data to distinguish a subchannel from others. All subchannels with subchannel orthogonal sequence multiplied are applied to subchannel summer 230. In this way, a plurality of subchannels of low data rate can be obtained within each traffic channel.

As shown in FIG. 3, the output of each subchannel modulator is stored in the corresponding subchannel memory 231 and is then provided as input to the subchannel data processor 232 in which the stored data are processed so as to reduce its energy level. In this data process, value 0 is considered as -1. The output of the subchannel summer 230 requires more representation levels than two levels because the output should represent the sum of the outputs of the plurality of subchannels. For example, if the number of subchannels is 16, the output of the subchannel summer 230 should be represented with 32 levels from -16 to +16. Hence, 5 bits are required to represent an output level of channel summer 230.

Channel modulator 120 combines several bits belonging to single output level of subchannel summer 230 and a Walsh code defining a traffic channel. Because the data rate of each subchannel is M (M is an integer) times lower than that of the traffic channel to which the subchannels belong, the output of subchannel summer 320 is not varied over a period of the Walsh sequence. Therefore, the plurality of subchannels can be formed within each traffic channel. In addition, a received signal gain is increased since data signal, whose energy is detected through a correlation process with a Walsh code, of a subchannel undergoes a correlation process again with a subchannel orthogonal sequence.

The output of channel modulator 120 in which each subchannel data is modulated is combined with each of a pair of PN codes by PN code combining unit 130. The pair of PN codes are generated with preset-offset phase such that multiple cell-sites or sectors using the same frequency assignment are distinguished from one another. This PN code spreads several bits indicative of mixed value of all subchannel data.

Then, the outputs of PN code combining unit 130 are provided as input to lowpass filter 140 that filters and flattens the outputs using a pair of digital FIR filters such that the outputs of lowpass filter 140 has flat power level in the frequency assignment. It should be noted that the plurality of subchannels belonging to a traffic channel are processed simultaneously by the pair of digital FIR filters.

The digital signals of lowpass filter 140 are modulated into analog signals by analog signal modulator 150 that includes a pair of digital-to-analog converters and a pair of mixers, and are then provided to analog signal summer 160. The analog signals are summed into an analog signal by analog signal summer 160 and the resulting analog signal is inputted to IF signal modulator 170. If it happens that the energy of the output of analog signal summer 150 is high due to the summation of signals of all traffic channels, the energy of the output signal is reduced to an appropriate energy level by analog signal summer 150.

Receiving the output signal from analog signal summer 150, IF signal modulator 170 produces a modulated signal using QPSK modulation. In case of QPSK modulation, in-phase and quadrature phase PN sequences are used in PN code combining unit 130, and sine and cosine functions are used in the pair of mixers of analog signal modulator 150.

The IF signal is up-converted into an RF signal by frequency up-converter 180. The RF signal is amplified by an RF amplifier (not shown), and is then bandpass filtered and radiated through an antenna system (not shown).

The foregoing is provided only for the purpose of illustration and explanation of the preferred embodiments of the present invention, so changes, variations and modifications may be made without departing from the scope of the invention.

## Claims

1. A method of transmitting data in a code division multiple access (CDMA) telecommunications system with multiple traffic channels using a plurality of N subchannels within a single traffic channel in a transmitter, the method comprising the steps of :
(a) encoding a plurality of parallel input signals in each subchannel by using convolutional encoding, symbol repetition, and interleaving independently;
(b) multiplying each of the plurality of the encoded input signals by respective first orthogonal code signals f₁, f₂, ... f_{N} in order to distinguish each subchannel from one another, so as to provide a plurality of N resultant subchannelized input signals;
(c) mixing the plurality of N subchannelized input signals into a resultant combined signal;
(d) multiplying the combined signal by a second orthogonal Walsh code signal in order to distinguish each traffic channel from one another, so as to provide a resultant channelized signal, wherein the bit rate of each first orthogonal sequence f₁, f₂, ... f_{N} is lower than the bit rate of the second orthogonal Walsh code signals, each being used in channel modulator for distinguishing traffic channels in the frequency assignment (FA),
(e) multiplying the resultant channelized signal by a PN code which is predetermined-offset in phase, so as to provide a PN code modulated signal;
(f) filtering the PN code modulated signal and flattening its power level in the frequency band; and
(g) converting the filtered signal into a radio frequency signal.

2. A method according to claim 1, wherein the data rate of each input signal is N times lower than the data rate defined for the resultant combined signal.

3. A method according to claim 1 or 2, wherein the bit rate of the respective first orthogonal code signals f₁, f₂, ... f_{N} is equal to the data rate defined for the resultant combined signal.

4. Transmitter for transmitting data in a code division multiple access (CDMA) telecommunications system with multiple traffic channels using a plurality of N subchannels within a single traffic channel, the transmitter comprising:
a plurality of N subchannel encoders (210-1, 210-2, ..., 210-N), each for convolutionally encoding with symbol repetition and interleaving input data from a respective one of a plurality of N subchannels, the data rate of each of the plurality of N subchannels being lower than the encodable date rate of the traffic channel;
a plurality of N subchannel modulators (220-1, 220-2, ..., 220-N), each for combining an output signal from a respective one of said plurality of N subchannel encoders (210-1, 210-2, ..., 210-N) with respective first orthogonal code signals f₁, f₂, ... f_{N} distinguishing a subchannel from one another, all N subchannels being accommodated in a single traffic channel; and
a subchannel summer (230) for summing the output signals of said plurality of N subchannel modulators (220-1, 220-2, ..., 220-N),
wherein said transmitter further comprises:
a traffic channel modulator (120) for combining the output signal from said subchannel summer (230) and a second orthogonal Walsh code signal distinguishing each traffic channel from one another, wherein the bit rate of each first orthogonal sequence f₁, f₂, ... f_{N} is lower than the bit rate of the second orthogonal Walsh code signals;
a pair of pseudo noise (PN) combiners (130), each for combining the respective output signals of said traffic channel modulator (120) and a respective one of a pair of pseudo noise signals which have a predetermined offset in phase;
a pair of lowpass filters (140), each for filtering a respective output signal of said pair of PN combiners (130) and flattening the power level of its output signal;
and an analog signal modulator (170) for converting output signals of said pair of lowpass filters to an RF signal.

5. The transmitter according to claim 4, wherein the data rate of each of the plurality of N subchannels is N times lower than a predetermined data rate of the summed signal that is input to the channel encoder (200).

6. The transmitter according to claim 4 or 5, wherein the bit rate of the respective first orthogonal code signals f₁, f₂, ... f_{N} is equal to a predetermined data rate of the input signal that is input to said traffic channel modulator (120).

7. The transmitter according to any of claims 4 to 6, wherein said subchannel summer (230) further comprises:
a plurality of N storing means (231-1, 231-2, ..., 231-N), each for storing subchannel signals from a respective one of said plurality of N subchannel modulators (220-1, 220-2, ..., 220-N); and
data processing means (232) for reading and processing the subchannel signals stored in said plurality of N storing means (231-1, 231-2, ..., 231-N).

8. The transmitter according to any of claims 4 to 7, wherein said subchannel summer (230) is adapted to reduce the energy of subchannel data of each or all of the plurality of N subchannels.

## Patentansprüche

1. Verfahren zum Übertragen von Daten in einen Code-Multiplex-Vielfachzugriff (CDMA)-Telekommunikationssystem mit mehreren Verkehrskanälen unter Verwendung einer Mehrzahl von N Unterkanälen innerhalb eines einzelnen Verkehrskanals in einer Sendeeinrichtung, wobei das Verfahren folgende Schritte aufweist:
(a) Codieren einer Mehrzahl von parallelen Eingangssignalen in jedem Unterkanal unter Verwendung von Faltungscodierung, Symbolwiederholung und Verschachtelung auf unabhängige Art;
(b) Multiplizieren jedes der Mehrzahl der codierten Eingangssignale mit jeweiligen ersten orthogonalen Codesignalen f₁, f₂, ... f_{N} zum Unterscheiden aller Unterkanäle voneinander, um so eine Mehrzahl von N resultierenden unterkanalisierten Eingangssignalen zu schaffen;
(c) Mischen der Mehrzahl von N unterkanalisierten Eingangssignalen in ein resultierendes kombiniertes Signal;
(d) Multiplizieren des kombinierten Signals mit einem zweiten orthogonalen Walsh-Codesignal zum Unterscheiden aller Verkehrskanäle voneinander, um so ein resultierendes kanalisiertes Signal zu schaffen, wobei die Bitrate von jeder ersten orthogonalen Sequenz f₁, f₂, ... f_{N} niedriger als die Bitrate der zweiten orthogonalen Walsh-Codesignale ist, wobei jedes in einem Kanalmodulator verwendet wird, um die Verkehrskanäle in der Frequenzzuordnung (FA) zu unterscheiden;
(e) Multiplizieren des resultierenden kanalisierten Signals mit einem PN-Code, welcher einen vorbestimmten Phasenversatz aufweist, um somit ein PN-Code- moduliertes Signal zu schaffen;
(f) Filtern des PN-Code-modulierten Signals und Glätten seines Leistungspegels in dem Frequenzband; und
(g) Umwandeln des gefilterten Signals in ein Radiofrequenzsignal.

2. Verfahren nach Anspruch 1, wobei die Datenrate von jedem Eingangssignal N mal niedriger ist als die Datenrate, welche für das resultierende kombinierte Signal definiert ist.

3. Verfahren nach Anspruch 1 oder 2, wobei die Bitrate der jeweiligen ersten orthogonalen Codesignale f₁, f₂, ... f_{N} gleich der Datenrate ist, welche für das resultierende kombinierte Signal definiert ist.

4. Sendeeinrichtung zum Übertragen von Daten in einem Code-Multiplex-Vielfachzugriff (CDMA)-Telekommunikationssystem mit mehreren Verkehrskanälen unter Verwendung von N Unterkanälen innerhalb eines einzelnen Verkehrskanals, wobei die Sendeeinrichtung aufweist:
eine Mehrzahl von N Unterkanalcodierern (210-1, 210-2, ... 210-N), jeweils zum Faltungscodieren mit Symbolwiederholung und Verschachtelung von Eingangsdaten von einem jeweiligen einer Mehrzahl von N Unterkanälen, wobei die Datenrate jedes der Mehrzahl von N Unterkanälen niedriger als die codierbare Datenrate des Verkehrskanals ist.;
eine Mehrzahl von N Unterkanalmodulatoren (220-1, 220-2, ..., 220-N) jeweils zum Kombinieren eines Ausgangssignals von einem jeweiligen von N Unterkanalcodierern (210-1, 210-2, ... 210-N) mit jeweiligen ersten orthogonalen Codesignalen f₁, f₂, ... f_{N} zum Unterscheiden der Unterkanäle voneinander, wobei N Unterkanäle in einem einzelnen Verkehrskanal untergebracht sind; und
einem Unterkanalsummierer (230) zum Summieren der Ausgangssignale der Mehrzahl von N Unterkanalmodulatoren (220-1, 220-2, ...220-N),
wobei die Sendeeinrichtung weiterhin aufweist:
einen Verkehrskanalmodulator (120) zum Kombinieren des Ausgangssignals von dem Unterkanalsummierer (230) und eines zweiten orthogonalen Walsh-Signals zum Unterscheiden jedes Verkehrskanals voneinander, wobei die Bitrate von jeder ersten orthogonalen Sequenz f₁, f₂, ... f_{N} niedriger ist als die Bitrate der zweiten orthogonalen Walsh-Codesignale;
ein Paar von Pseudorausch-(PN)-Kombinierern (130), jeweils zum Kombinieren der jeweiligen Ausgangssignale des ersten Verkehrskanalmodulators (120) und eines jeweiligen eines Paars von Pseudorausch-Signalen, welche einem vorbestimmten Phasenversatz aufweisen;
ein Paar von Tiefpassfiltern (140) zum Filtern eines jeweiligen Ausgangssignals des Paars von PN-Kombinierern (130) und Glätten des Pegels seines Ausgangssignals;
und einen Analogsignalmodulator (170) zum Wandeln der Ausgangssignale des Paares von Tiefpassfiltern in ein RF-Signal.

5. Sendeeinrichtung nach Anspruch 4, wobei die Datenrate jedes der Vielzahl von N Unterkanälen niedriger als eine vorbestimmte Datenrate des summierten Signals ist, welches in den Kanalcodierer (220) eingebbar ist.

6. Sendeeinrichtung nach Anspruch 4 oder 5, wobei die Bitrate der jeweiligen ersten orthogonalen Codesignale f₁, f₂, ... f_{N} gleich einer vorbestimmten Datenrate des Eingangssignals ist, welches in den Verkehrskanalmodulator (120) eingebbar ist.

7. Sendeeinrichtung nach einem der Ansprüche 4 bis 6, wobei der Unterkanalsummierer (230) weiterhin aufweist:
eine Mehrzahl von N Speichereinrichtungen (231-1, 231-2, ..., 231-N), jeweils zum Speichern von Unterkanalsignalen von einem jeweiligen der Mehrzahl von N Unterkanalmodulatoren (220-1, 220-2, ..., 220-N); und
eine Datenverarbeitungseinrichtung (232) zum Lesen und Verarbeiten der Unterkanalsignale, welche in der Mehrzahl von N Speichereinrichtungen (231-1, 231-2, ..., 231-N) gespeichert sind.

8. Sendeeinrichtung nach einem der Ansprüche 4 bis 7, wobei der Unterkanalsummierer (230) zum Reduzieren der Energie von Unterkanaldaten von jedem oder einem der Mehrzahl von Unterkanälen eingerichtet ist.

## Revendications

1. Procédé d'émission de données dans un système de télécommunications à accès multiple par répartition en code (AMRC) comportant des canaux de trafic multiples utilisant une pluralité de N canaux secondaires à l'intérieur d'un canal de trafic unique dans un émetteur, le procédé comprenant les étapes consistant à :
(a) coder une pluralité de signaux d'entrée parallèles dans chaque canal secondaire en utilisant le codage à convolution, la répétition de symboles et l'entrelacement indépendamment ;
(b) multiplier chaque signal de la pluralité des signaux d'entrée codés par des premiers signaux de code orthogonaux respectifs f₁, f₂, ..., f_{N} afin de distinguer chaque canal secondaire l'un de l'autre, de façon à fournir une pluralité de N signaux d'entrée sous-divisés en canaux résultants ;
(c) mélanger la pluralité de N signaux d'entrée sous-divisés en canaux en un signal combiné résultant ;
(d) multiplier le signal combiné par un second signal de code de Walsh orthogonal pour distinguer chaque canal de trafic l'un de l'autre, de façon à fournir un signal divisé en canaux résultant, dans lequel le débit binaire de chaque première séquence orthogonale f₁, f₂, ..., f_{N} est inférieur au débit binaire des seconds signaux de code de Walsh orthogonaux, chacun étant utilisé dans un modulateur de canal pour distinguer des canaux de trafic dans l'attribution de fréquence (FA),
(e) multiplier le signal divisé en canaux résultant par un code de PN qui est déphasé de façon prédéterminée, de façon à fournir un signal modulé de code de PN;
(f) filtrer le signal modulé de code de PN et aplanir son niveau de puissance dans la bande de fréquences ; et
(g) transformer le signal filtré en un signal haute fréquence.

2. Procédé selon la revendication 1, dans lequel le débit de données de chaque signal d'entrée est N fois plus bas que le débit de données défini pour le signal combiné résultant.

3. Procédé selon la revendication 1 ou 2, dans lequel le débit binaire des premiers signaux de code orthogonaux respectifs f₁, f₂, ..., f_{N} est égal au débit de données défini pour le signal combiné résultant.

4. Émetteur pour émettre des données dans un système de télécommunications à accès multiple par répartition en code (AMRC) comportant des canaux de trafic multiples utilisant une pluralité de N canaux secondaires à l'intérieur d'un canal de trafic unique, l'émetteur comprenant :
une pluralité de N codeurs de canal secondaire (210-1, 210-2, ..., 210-N), chacun pour le codage à convolution avec répétition de symboles et l'entrelacement de données d'entrée en provenance d'un canal respectif d'une pluralité de N canaux secondaires, le débit de données de chaque canal secondaire de la pluralité de N canaux secondaires étant inférieur au débit de données pouvant être codées du canal de trafic ;
une pluralité de N modulateurs de canal secondaire (220-1, 220-2, ..., 220-N), chacun pour combiner un signal de sortie en provenance d'un codeur respectif de ladite pluralité de N codeurs de canal secondaire (210-1, 210-2, ..., 210-N) avec des premiers signaux de code orthogonaux respectifs f₁, f₂, ..., f_{N} distinguant un canal secondaire l'un de l'autre, tous les N canaux secondaires étant logés dans un canal de trafic unique ; et
un additionneur de canal secondaire (230) pour additionner les signaux de sortie de ladite pluralité de N modulateurs de canal secondaire (220-1, 220-2, ..., 220-N),
dans lequel ledit émetteur comprend en outre :
un modulateur de canal de trafic (120) pour combiner le signal de sortie en provenance dudit additionneur de canal secondaire (230) et un second signal de code de Walsh orthogonal distinguant chaque canal de trafic l'un de l'autre, dans lequel le débit binaire de chaque première séquence orthogonale f₁, f₂, ..., f_{N} est inférieur au débit binaire des seconds signaux de code de Walsh orthogonaux ;
un couple de circuits mélangeurs (130) de pseudo-bruit (PN), chacun pour combiner les signaux de sortie respectifs dudit modulateur de canal de trafic (120) et d'un signal respectif d'un couple de signaux de pseudo-bruit qui ont un déphasage prédéterminé ;
un couple de filtres passe-bas (140), chacun pour le filtrage d'un signal de sortie respectif dudit couple de circuits mélangeurs de PN (130) et pour l'aplanissement du niveau de puissance de son signal de sortie ;
et un modulateur de signal analogique (170) pour transformer les signaux de sortie dudit couple de filtres passe-bas en un signal HF.

5. Émetteur selon la revendication 4, dans lequel le débit de données de chaque canal secondaire de la pluralité de N canaux secondaires est N fois plus bas qu'un débit de données prédéterminé du signal additionné qui est entré dans le codeur de canal (200).

6. Émetteur selon la revendication 4 ou 5, dans lequel le débit binaire des premiers signaux de code orthogonaux respectifs f₁, f₂, ..., f_{N} est égal à un débit de données prédéterminé du signal d'entrée qui est entré dans ledit modulateur de canal de trafic (120).

7. Émetteur selon l'une quelconque des revendications 4 à 6, dans lequel ledit additionneur de canal secondaire (230) comprend en outre :
une pluralité de N moyens de stockage (231-1, 231-2, ..., 231-N), chacun servant à stocker des signaux de canal secondaire en provenance d'un modulateur respectif de ladite pluralité de N modulateurs de canal secondaire (220-1, 220-2, ..., 220-N) ; et
un moyen de traitement de données (232) pour lire et traiter les signaux de canal secondaire stockés dans ladite pluralité de N moyens de stockage (231-1, 231-2, ..., 231-N).

8. Émetteur selon l'une quelconque des revendications 4 à 7, dans lequel ledit additionneur de canal secondaire (230) est conçu pour réduire l'énergie des données de canal secondaire de chaque canal ou de la totalité des canaux de la pluralité de N canaux secondaires.
